# FASCICULE DE BREVET EUROPEEN

(11) **EP 3 648 643 B1**
(45) Date de publication et mention de la délivrance du brevet: **25.01.2023**
(21) Numéro de dépôt: 18752815.3
(22) Date de dépôt: 06.07.2018
(51) Int. Cl.: A47J 37/12, A47J 27/08

(54) **FRITEUSE AVEC COUVERCLE ANTI-OXYDATION**
FRITTEUSE MIT ANTIOXIDATIONSDECKEL
FRYER WITH ANTI-OXIDATION LID

(30) Priorité: 07.07.2017 FR 1756448
(43) Date de publication de la demande: 13.05.2020
(73) Titulaire: SEB S.A., 69130 Ecully (FR)
(72) Inventeur: BLONDEL, Mathilde, 21120 Dienay (FR)
(74) Mandataire: SEB Développement
(86) Numéro de dépôt international: PCT/FR2018/051713
(87) Numéro de publication internationale: WO 2019/008302

(56) Documents cités:
- FR-A- 1 517 736
- US-A1- 2004 163 547
- US-A1- 2008 290 092
- US-B1- 7 134 385

## Description

La présente invention concerne les friteuses comportant une cuve pour la réalisation de fritures en bain d'huile, et un couvercle.

La présente invention concerne plus particulièrement l'enceinte formée par la cuve et le couvercle.

La présente invention concerne notamment, mais non exclusivement, les friteuses électriques.

L'huile de friture est sensible à l'oxydation. L'oxydation de l'huile contribue au vieillissement de l'huile, qui nécessite de limiter la durée d'utilisation d'un bain d'huile ainsi que le nombre de fritures réalisées, pour éviter d'utiliser un bain d'huile trop dégradé. De plus les produits issus de cette réaction d'oxydation sont d'une part des sources d'odeurs désagréables et d'autre part des sources de polymères qui encrassent les friteuses.

Le document FR1517736 divulgue une friteuse comportant une cuve pour contenir un bain d'huile et un couvercle couvrant la cuve. Le couvercle peut être monté de manière étanche sur le bord de la cuve. Toutefois un filtre logé dans le couvercle permet la communication de l'intérieur de la cuve avec l'atmosphère, en désodorisant les vapeurs et les fumées. Une telle construction contribue à limiter les odeurs désagréables produites lors de la cuisson. Le couvercle monté pivotant comporte de plus au voisinage de son point le plus bas en position d'ouverture, une soupape à ouverture automatique lorsque le couvercle est amené en position haute, cette soupape permettant l'évacuation de l'eau de condensation située sur la paroi inférieure du couvercle. Cette disposition permet de limiter les retombées de condensats dans le bain d'huile, ce qui favorise la bonne conservation de l'huile. Toutefois les montées et descentes en température successives du bain d'huile ainsi que l'immersion des aliments à frire dans le bain d'huile dégrade inexorablement la qualité de l'huile.

Un appareil selon le préambule de la revendication 1 est connu du document US2008/0290092.

Un objet de la présente invention est de proposer une friteuse qui permette de ralentir le vieillissement de l'huile utilisée pour la réalisation de fritures en bain d'huile.

Un autre objet de la présente invention est de proposer une friteuse qui permette de réduire la consommation d'huile de friture utilisée pour la réalisation de fritures en bain d'huile, tout en présentant une construction économique.

Un autre objet de la présente invention est de proposer une friteuse qui permette de réduire la consommation d'huile de friture utilisée pour la réalisation de fritures en bain d'huile, tout en présentant une utilisation simple. Un autre objet de la présente invention est de proposer une friteuse qui permette de préserver plus longtemps les qualités nutritionnelles de l'huile utilisée pour la réalisation de fritures en bain d'huile.

Un autre objet de la présente invention est de proposer une friteuse qui permette de limiter davantage les odeurs de friture, notamment lors de la conservation de l'huile de friture dans ladite friteuse.

Un autre objet de la présente invention est de proposer un procédé d'amélioration de la conservation d'un bain d'huile dans une friteuse du type précité.

Ces objets sont atteints avec une friteuse comportant une cuve pour contenir un bain d'huile et un couvercle pour couvrir la cuve, la cuve et le couvercle formant alors une enceinte, l'enceinte présentant au moins une étanchéité relative par rapport à l'admission d'air extérieur dans l'enceinte, le couvercle portant un clapet aéraulique pour mettre en communication l'enceinte avec l'extérieur lorsque la pression régnant dans l'enceinte dépasse une pression seuil, le couvercle comportant un joint annulaire venant en appui annulaire avec la cuve lorsque le couvercle ferme la cuve, la cuve présentant un bord supérieur et un rebord périphérique entourant le bord supérieur, du fait que le joint annulaire vient en appui sur le rebord périphérique autour du bord supérieur lorsque le couvercle ferme la cuve, de sorte qu'en cas de dépression à l'intérieur de l'enceinte, la pression extérieure permet de plaquer le joint annulaire contre le rebord périphérique. Des essais ont en effet montré que confiner au moins partiellement l'atmosphère dans l'enceinte au dessus du bain d'huile pour limiter les échanges entre l'atmosphère et l'air extérieur permettait de limiter le vieillissement du bain d'huile. Le couvercle proposé permet de confiner au moins partiellement l'atmosphère au dessus du bain d'huile après que les aliments ont été retirés du bain d'huile, jusqu'à la préchauffe du bain d'huile pour la cuisson suivante. Lorsque l'étanchéité est relative entre la cuve et le couvercle, les apports d'air frais sont limités à l'oxygène consommé dans l'enceinte, notamment lors de la phase de refroidissement ou de la phase de préchauffe. En l'absence de fuite entre le couvercle et la cuve, l'enceinte peut alors être confinée. Le clapet aéraulique permet de bloquer l'entrée d'air dans l'enceinte par le couvercle, tout en autorisant une évacuation de la vapeur d'eau en cas de surpression dans l'enceinte. L'oxydation de l'huile est liée à la présence d'oxygène dans l'air en contact avec l'huile. Limiter l'oxydation de l'huile permet donc d'allonger la durée de vie de l'huile mais aussi de la friteuse. Au cours de la cuisson, la production de vapeur par l'aliment limite la présence d'oxygène dans l'espace au dessus de l'huile. Il est donc intéressant d'essayer de limiter l'oxydation de l'huile en dehors des périodes de cuisson des aliments. Pendant la préchauffe et le refroidissement, la température de l'huile est élevée, ce qui accélère les réactions et favorise l'oxydation de l'huile. Bien que ces étapes de refroidissement et de préchauffe soient courtes par rapport au temps entre deux cuissons, il est donc important de les prendre aussi en compte. C'est donc pendant les phases de préchauffe de l'huile, de refroidissement de l'huile, et de stockage de l'huile qu'il faut limiter le contact oxygène/huile, pour limiter le vieillissement de l'huile. Une huile mieux conservée peut être utilisée plus longtemps et/ou pour un nombre de bains plus important. Les émissions odorantes peuvent être réduites notamment lors de la phase de refroidissement de l'huile.

Avantageusement alors, le clapet aéraulique présente une configuration fermée, dans laquelle le clapet aéraulique empêche l'air extérieur d'entrer dans l'enceinte par le clapet aéraulique, et une configuration ouverte, dans laquelle le clapet aéraulique libère au moins un passage mettant en communication l'enceinte avec l'extérieur. La transition entre la configuration fermée et la configuration ouverte peut être réalisée par déplacement et/ou par déformation d'un ou plusieurs éléments du clapet aéraulique.

Avantageusement alors, le clapet aéraulique est mobile de manière réversible entre la configuration fermée, occupée tant que la pression régnant dans l'enceinte est inférieure à la pression seuil, et la configuration ouverte, occupée lorsque la pression régnant dans l'enceinte dépasse la pression seuil. Cette disposition permet d'éviter une entrée d'air extérieur dans l'enceinte après la fin d'un échappement de vapeur hors de ladite enceinte.

Avantageusement alors, le clapet aéraulique présentant la configuration ouverte ménage une section de passage supérieure à 10 mm². Cette disposition permet d'obtenir un débit de 3 à 4 litres/min suffisant pour éliminer la vapeur d'eau issue de l'eau résiduelle présente dans le bain d'huile, lors de la préchauffe suivante.

Avantageusement encore, la pression seuil est inférieure à 500 mbar, et de préférence inférieure à 100 mbar. Cette disposition permet de limiter les risques d'accumulation de vapeur d'eau dans l'enceinte.

Avantageusement encore, la pression seuil est comprise entre 10 et 100 mbar, et de préférence comprise entre 15 et 25 mbar. Cette disposition permet d'évacuer rapidement la surpression formée dans l'enceinte par la vaporisation de l'eau résiduelle lors du préchauffage du bain d'huile.

Avantageusement encore, le couvercle présente une surface d'obturation pour couvrir la cuve et la surface d'obturation est traversée par le clapet aéraulique. Cette disposition permet d'obtenir une construction simple et économique.

Avantageusement alors, la surface d'obturation est réalisée en matériau(x) opaque(s). Cette disposition permet d'améliorer la conservation de l'huile.

Avantageusement encore, l'enceinte présente une étanchéité à l'admission d'air extérieur entre la cuve et le couvercle. Cette disposition permet d'optimiser la conservation de l'huile.

Avantageusement encore, l'enceinte est réalisée en matériau(x) opaque(s). Cette disposition permet d'améliorer la conservation du bain d'huile contenu dans la cuve.

Selon un mode de réalisation avantageux, la friteuse comporte un dispositif électrique de chauffe pour chauffer la cuve et/ou le bain d'huile contenu dans la cuve.

Avantageusement encore, la friteuse comporte un dispositif de retenue pour maintenir le couvercle plaqué sur la cuve. Cette disposition permet d'améliorer l'étanchéité entre le couvercle et la cuve. Toutefois l'utilisation d'un couvercle reposant sur la cuve peut également être envisagée.

Avantageusement encore, la cuve est montée dans un boîtier. Si désiré le couvercle peut être monté sur le boîtier pour fermer la cuve.

Avantageusement alors, le dispositif de retenue relie le couvercle au boîtier. Cette disposition permet de simplifier la construction de la friteuse.

Avantageusement alors, le couvercle est monté pivotant sur le boîtier. Cette disposition permet de faciliter l'utilisation de la friteuse.

Ces objets sont également atteints avec un procédé d'amélioration de la conservation d'un bain d'huile dans une friteuse du type précité, comprenant les étapes suivantes :
- Après un chauffage d'un bain d'huile contenu dans la cuve, fermeture de la cuve contenant le bain d'huile par le couvercle pour former l'enceinte, de préférence après retrait des aliments du bain d'huile,
- Refroidissement du bain d'huile contenu dans la cuve avec le couvercle fermant la cuve.

Ces dispositions permettent d'éviter le renouvellement de l'air présent dans l'enceinte au-dessus du bain d'huile, lors du refroidissement du bain d'huile dans la cuve, puis de la conservation du bain d'huile dans la cuve entre deux utilisations, ce qui contribue à limiter la quantité d'oxygène susceptible d'interagir avec le bain d'huile durant la conservation du bain d'huile.

Avantageusement alors, le procédé consiste à réaliser une étape de préchauffe du bain d'huile contenu dans la cuve avant une cuisson d'aliments, dans laquelle la préchauffe du bain d'huile contenu dans la cuve est effectuée avec le couvercle fermant la cuve.

Cette disposition permet d'éviter le renouvellement de l'air présent dans l'enceinte au-dessus du bain d'huile, lors de la phase de préchauffe du bain d'huile avant une cuisson d'aliments, ce qui contribue également à limiter la quantité d'oxygène susceptible d'interagir avec le bain d'huile lors de cette phase de préchauffe, tout en permettant l'évacuation d'une partie de la vapeur d'eau formée dans l'enceinte lors de la préchauffe du bain d'huile.

L'invention sera mieux comprise à l'étude d'un exemple de réalisation, pris à titre nullement limitatif, illustré dans les figures annexées, dans lesquelles :
- la figure 1 illustre de manière schématique un exemple de réalisation d'une friteuse selon l'invention,
- la figure 2 présente l'évolution des taux de composés polaires du bain d'huile mesurés avec une friteuse de l'art antérieur et une friteuse selon l'invention,
- les figures 3 et 4 illustrent de manière schématique un clapet aéraulique de type clapet parapluie, respectivement en configuration fermée et en configuration ouverte.

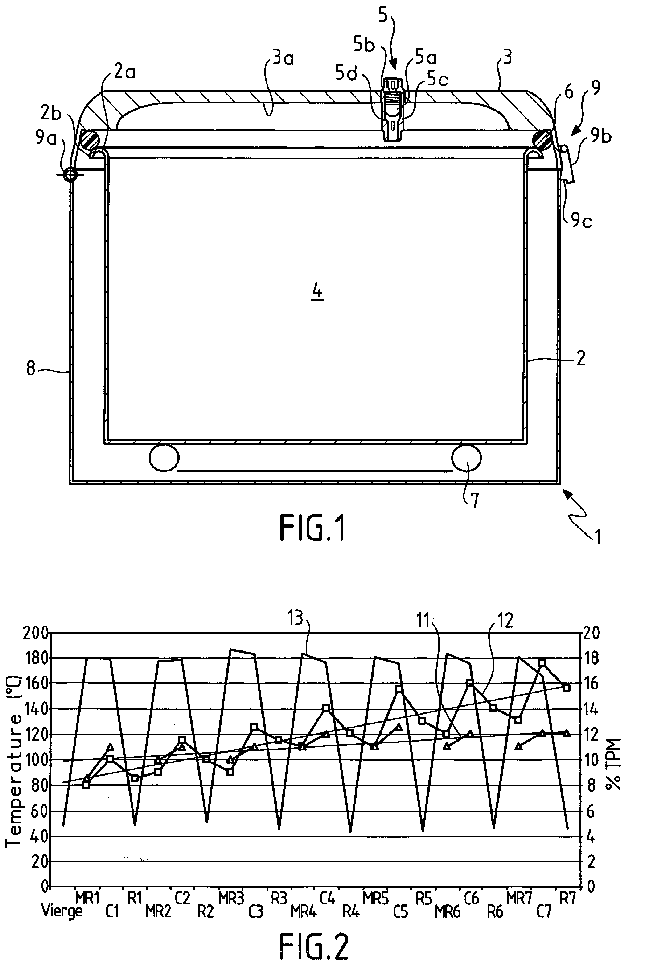

La figure 1 illustre de manière schématique une friteuse 1 comportant une cuve 2 pour contenir un bain d'huile. Si désiré, la friteuse 1 peut comporter un boîtier 8 pour recevoir de manière amovible ou non la cuve 2. La friteuse 1 comporte également un couvercle 3 pour couvrir la cuve 2. A cet effet le couvercle 3 présente une surface d'obturation 3a. La cuve 2 et le couvercle 3 forment alors une enceinte 4. La friteuse 1 peut également comporter au moins un accessoire de cuisson (non représenté) tel que par exemple un panier de cuisson ajouré prévu pour plonger les aliments à frire dans le bain d'huile contenu dans la cuve 2.

La friteuse 1 peut comporter un dispositif de retenue 9 pour maintenir le couvercle 3 plaqué sur la cuve 2. Dans l'exemple de réalisation illustré sur la figure 1, la cuve 2 est montée dans le boîtier 8. Le dispositif de retenue 9 relie le couvercle 3 au boîtier 8. Plus particulièrement dans l'exemple de réalisation illustré sur la figure 1, le couvercle 3 est monté pivotant sur le boîtier 8. Le dispositif de retenue 9 comprend à cet effet une charnière 9a reliant le couvercle 3 au boîtier 8. Le dispositif de retenue 9 comprend également un élément d'accrochage 9b solidaire du couvercle 3 et un élément de retenue 9c solidaire du boîtier 8. L'élément d'accrochage 9b et l'élément de retenue 9c sont avantageusement agencés à l'opposé de la charnière 9a par rapport à la cuve 2. Lorsque le couvercle 3 ferme la cuve 2, l'élément d'accrochage 9b peut être amené en prise avec l'élément de retenue 9c pour plaquer le couvercle 3 sur la cuve 2 afin d'assurer une bonne étanchéité entre le couvercle 3 et la cuve 2.

Selon l'invention, l'enceinte 4 présente au moins une étanchéité à l'admission d'air extérieur dans l'enceinte 4, et le couvercle 3 porte un clapet aéraulique 5 pour mettre en communication l'enceinte 4 avec l'extérieur lorsque la pression régnant dans l'enceinte 4 dépasse une pression seuil. De manière préférée, l'enceinte 4 présente une étanchéité à l'admission d'air extérieur entre la cuve 2 et le couvercle 3, notamment en cas de dépression dans l'enceinte 4.

Le clapet aéraulique 5 présente une configuration ouverte, illustrée sur la figure 1, dans laquelle le clapet aéraulique 5 libère au moins un passage mettant en communication l'enceinte 4 avec l'extérieur, et une configuration fermée, dans laquelle le clapet aéraulique 5 empêche l'air extérieur d'entrer dans l'enceinte 4 par le clapet aéraulique 5. Le clapet aéraulique 5 peut notamment être sélectionné pour que la pression seuil soit inférieure à 500 mbar, et de préférence inférieure à 100 mbar. Une pression seuil comprise entre 10 et 100 mbar, notamment entre 15 et 25 mbar, permet une évacuation satisfaisante de l'enceinte 4. Tel que précisé plus loin dans la description, les valeurs de pression seuil ainsi mentionnées sont des valeurs de pression relative, par rapport à la pression atmosphérique de référence, et non des valeurs de pression absolue. Tel que visible sur la figure 1, la surface d'obturation 3a du couvercle 3 est traversée par le clapet aéraulique 5.

Le clapet aéraulique 5 peut présenter au moins un élément d'obturation 5a mobile et/ou déformable. L'élément d'obturation 5a peut être monté mobile contre un élément de rappel élastique 5b. Dans l'exemple de réalisation illustré sur la figure 1, l'élément d'obturation 5a est une bille montée mobile dans un conduit 5c présentant un siège 5d. L'élément d'obturation 5a est monté mobile contre un ressort hélicoïdal formant l'élément de rappel élastique 5b. Dans la configuration ouverte, le clapet aéraulique 5 libère au moins un passage mettant en communication l'enceinte 4 avec l'extérieur, l'élément d'obturation 5a étant déplacé à distance du siège 5d. Dans la configuration fermée, l'élément de rappel élastique 5b pousse l'élément d'obturation 5a contre le siège 5d.

De préférence, le clapet aéraulique 5 présentant la configuration ouverte peut reprendre la configuration fermée dès que la pression régnant dans l'enceinte 4 est retombée. En d'autres termes, le clapet aéraulique 5 présente une configuration de repos correspondant à la configuration fermée.

De préférence, le clapet aéraulique 5 présentant la configuration ouverte ménage une section de passage supérieure à 10 mm².

Dans l'exemple de réalisation illustré sur la figure 1, le couvercle 3 comporte un joint annulaire 6 venant en appui annulaire avec la cuve 2 lorsque le couvercle 3 ferme la cuve 2, pour assurer une étanchéité entre le couvercle 3 et la cuve 2. Selon la nature du joint annulaire 6 utilisé, l'enceinte 4 peut présenter une étanchéité relative par rapport à l'admission d'air extérieur dans l'enceinte 4, quelques fuites pouvant alors survenir entre le joint annulaire 6 et la cuve 2 et/ou entre le joint annulaire 6 et le couvercle 3, ou une étanchéité plus poussée permettant de confiner l'enceinte 4 tant que le clapet aéraulique 5 reste fermé.

Dans l'exemple de réalisation illustré sur la figure 1, la cuve 2 présente un bord supérieur 2a et un rebord périphérique 2b entourant le bord supérieur 2a. Tel que représenté sur la figure 1, le joint annulaire 6 vient en appui sur le rebord périphérique 2b autour du bord supérieur 2a lorsque le couvercle 3 ferme la cuve 2. La pression extérieure permet ainsi de plaquer le joint annulaire 6 contre le rebord périphérique 2b en cas de dépression à l'intérieur de l'enceinte 4, ce qui contribue à éviter l'admission d'air extérieur dans l'enceinte 4.

La surface d'obturation 3a est de préférence réalisée en matériau(x) opaque(s), de même que la cuve 2 et le joint annulaire 6. L'enceinte 4 est alors réalisée en matériau(x) opaque(s).

Dans l'exemple de réalisation illustré sur la figure 1, la friteuse 1 comporte un dispositif électrique de chauffe 7 pour chauffer la cuve 2. Le dispositif électrique de chauffe 7 est disposé sous le fond de la cuve 2.

La friteuse illustrée sur la figure 1 fonctionne et s'utilise de la manière suivante.

Pour réaliser des fritures dans le bain d'huile contenu dans la cuve 2, la friteuse 1 est utilisée sans le couvercle 3. Le couvercle 3 est utilisé lors du refroidissement du bain d'huile après une cuisson, entre deux cuissons successives, ainsi que lors de la préchauffe du bain d'huile avant de réaliser une nouvelle cuisson. La phase de cuisson inclut la mise en place des aliments dans le bain d'huile, la cuisson, le retrait des aliments du bain d'huile, l'égouttage des aliments au dessus du bain d'huile.

Lors du refroidissement du bain d'huile, de la conservation du bain d'huile entre deux cuissons successives, ou de la préchauffe du bain d'huile, le couvercle 3 ferme la cuve 2 pour former l'enceinte 4.

Après le retrait des aliments frits du bain d'huile intervient une phase de refroidissement de l'huile. Le confinement de l'enceinte 4 permet de limiter les apports d'oxygène à la quantité d'oxygène présente au dessus du bain d'huile, le clapet aéraulique 5 en configuration fermée bloquant l'admission de l'air extérieur. Le confinement partiel de l'enceinte 4 permet de restreindre le renouvellement de l'oxygène dans l'atmosphère au dessus du bain d'huile à l'air extérieur admis par les fuites survenant entre la cuve 2 et le couvercle 3 du fait de la dépression générée dans l'enceinte 4 par l'absorption de l'oxygène. La phase de refroidissement de l'huile présente une durée de quelques heures, mais le confinement au moins partiel de l'atmosphère au dessus du bain d'huile permet de diminuer l'oxydation de l'huile, notamment en début de refroidissement lorsque la température du bain d'huile est encore élevée.

En l'absence de fuites hors de l'enceinte 4, la condensation de la vapeur d'eau présente au dessus du bain d'huile ainsi que l'absorption d'oxygène par le bain d'huile peut créer une légère dépression qui contribue à plaquer le couvercle 3 sur la cuve 2 et à améliorer la conservation du bain d'huile contenu dans la cuve 2 fermée par le couvercle 3.

Après la phase de refroidissement de l'huile intervient une phase de conservation, qui peut présenter une durée plus ou moins longue. Lors de la phase de conservation, les échanges d'air entre l'enceinte 4 et l'extérieur sont minimes, même en cas d'étanchéité relative entre la cuve 2 et le couvercle 3. Le confinement plus ou moins poussé de l'atmosphère dans l'enceinte 4 au dessus du bain d'huile permet de limiter notoirement l'apport d'air extérieur dans l'enceinte, voire quasiment de le supprimer.

L'invention concerne ainsi également un procédé d'amélioration de la conservation d'un bain d'huile dans la friteuse 1, comprenant les étapes suivantes :
- Après un chauffage d'un bain d'huile contenu dans la cuve 2, fermeture de la cuve 2 contenant le bain d'huile par le couvercle 3 pour former l'enceinte 4, de préférence après retrait des aliments du bain d'huile,
- Refroidissement du bain d'huile contenu dans la cuve 2 avec le couvercle 3 fermant la cuve 2.

Ainsi afin de mieux conserver le bain d'huile le couvercle 3 peut être mis en place sur la cuve 2 dès que les aliments ont été retirés du bain d'huile, pour rester en place sur la cuve 2 tant que la friteuse 1 n'est pas utilisée.

Lorsque l'utilisateur souhaite réaliser une nouvelle cuisson, intervient une phase de préchauffe de l'huile, dans laquelle l'eau résiduelle contenue dans le bain d'huile est évaporée. Le clapet aéraulique 5 permet alors d'évacuer la vapeur d'eau hors de l'enceinte 4, et de refermer l'enceinte 4 dès que la pression interne est retombée à l'intérieur de l'enceinte 4, pour éviter de renouveler l'air.

Lorsque l'utilisateur procède à la cuisson d'aliments, la vapeur d'eau se dégageant du bain d'huile permet de protéger le bain d'huile de l'oxygène de l'air.

Le couvercle 3 permet ainsi de faire chuter la pression partielle en oxygène dans l'enceinte 4 en évitant que l'oxygène absorbé par le bain d'huile ne soit remplacé par de l'air extérieur. Ainsi les valeurs de pression seuil précédemment mentionnées (pression seuil inférieure à 500 mbar, et de préférence inférieure à 100 mbar, avantageusement comprise entre 10 et 100 mbar, notamment entre 15 et 25 mbar) sont des valeurs de pression relative, et non des valeurs de pression absolue. La pression seuil est ainsi une pression relative inférieure à 500 mbar, et de préférence inférieure à 100 mbar, avantageusement comprise entre 10 et 100 mbar, notamment entre 15 et 25 mbar. En d'autres termes, les valeurs de pression seuil précédemment mentionnées sont des valeurs de surpression par rapport à la pression atmosphérique de référence, et non des valeurs de pression absolue. Si cette pression seuil était une pression absolue, un clapet aéraulique 5 fonctionnant à une pression seuil de 500 mbar ou moins ne serait pas fonctionnel dans un environnement domestique usuel, dans lequel la pression à l'extérieur de l'enceinte serait toujours supérieure à une telle pression seuil.

L'invention concerne ainsi également un procédé d'amélioration de la conservation d'un bain d'huile dans la friteuse 1, consistant à réaliser une étape de préchauffe du bain d'huile contenu dans la cuve 2 avant une cuisson d'aliments, dans laquelle la préchauffe du bain d'huile contenu dans la cuve 2 est effectuée avec le couvercle 3 fermant la cuve 2.

Ainsi le couvercle 3 peut rester en place sur la cuve 2 même lors d'une phase de préchauffe du bain d'huile avant de réaliser une nouvelle cuisson.

La figure 2 illustre l'évolution des taux de composés polaires dans un bain d'huile lors d'une succession de cycles de cuisson. La courbe 11 représente l'évolution du taux de composés polaires d'un bain d'huile dans la friteuse 1 selon l'invention, en couvrant la cuve 2 avec le couvercle 3 en dehors des phases de cuisson, pour former une enceinte 4 présentant une étanchéité relative entre la cuve 2 et le couvercle 3. La courbe 12 représente l'évolution du taux de composés polaires d'un bain d'huile dans une friteuse de l'art antérieur dépourvue de couvercle fermant la cuve pour former une enceinte en dehors des phases de cuisson. La courbe 13 illustre l'évolution de la température du bain d'huile au cours des cycles de chauffe. Il est remarquable de constater que l'évolution du taux de composés polaires est bien moindre sur la courbe 11 relative à une friteuse selon l'invention, que sur la courbe 12 relative à une friteuse de l'art antérieur, alors que des fuites d'air entre la cuve 2 et le couvercle 3 sont survenues lorsque l'enceinte 4 entrait en dépression, autorisant une admission d'air frais dans l'enceinte 4. Les mesures de colorimétrie permettent également de constater une moindre dégradation de l'huile.

Le couvercle 3 fermant la cuve 2 forme ainsi un couvercle anti-oxydation qui permet de limiter l'oxydation du bain d'huile contenu dans l'enceinte 4 en restreignant fortement voire en supprimant les apports d'air frais à l'intérieur de l'enceinte 4 lors des phases de refroidissement, de conservation ou de préchauffe. La friteuse 1 comportant le couvercle 3 anti-oxydation présente une construction économique et est facile à utiliser. Le ralentissement du vieillissement du bain d'huile permet d'une part d'envisager une augmentation de la durée d'utilisation du bain d'huile, et d'autre part une augmentation du nombre d'utilisations du bain d'huile, tout en réduisant les odeurs et en limitant l'encrassement de la friteuse 1 avec de l'huile polymérisée.

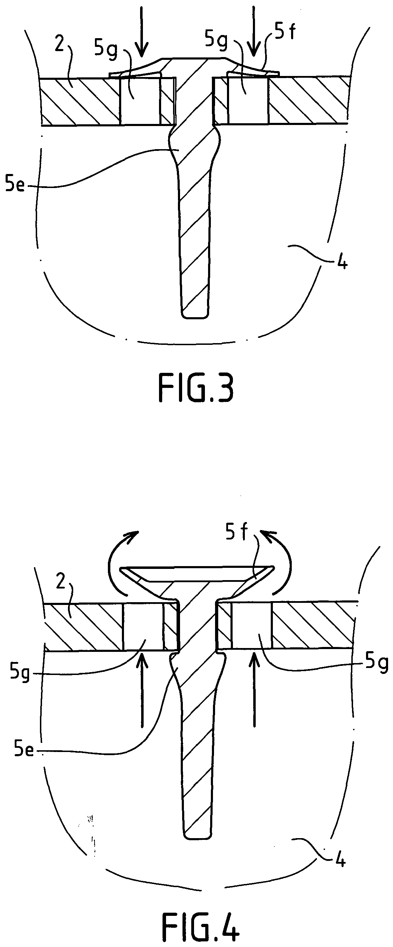

A titre de variante, l'élément d'obturation 5a n'est pas nécessairement monté contre un élément de rappel élastique 5b. Le clapet aéraulique 5 n'est pas nécessairement un clapet à bille. L'élément d'obturation 5a ne présente pas nécessairement des mouvements d'ouverture et de fermeture en translation. L'élément d'obturation 5a peut notamment présenter des mouvements d'ouverture et de fermeture en rotation. Si désiré, l'élément d'obturation 5a peut être réalisé en matériau élastiquement déformable sous l'action de la pression régnant dans l'enceinte 4, pour former un clapet aéraulique 5 de type clapet parapluie, tel que représenté sur les figures 3 et 4.

Le clapet aéraulique 5 de type clapet parapluie représenté sur les figures 3 et 4 comporte une partie fixe 5e et une partie d'obturation 5f déformable. La partie fixe 5e est montée sur le couvercle 3. La partie d'obturation 5f est liée à la partie fixe 5e. La partie d'obturation 5f et la partie fixe 5e appartiennent de préférence à une même pièce réalisée en matériau souple, par exemple en silicone. La partie d'obturation 5f est agencée à l'extérieur de l'enceinte 4. Plus particulièrement dans l'exemple de réalisation illustré sur les figures 3 et 4, la partie fixe 5e traverse la paroi du couvercle 3. Le clapet aéraulique 5 peut occuper une configuration fermée, ou configuration de repos, représentée sur la figure 3, et une configuration ouverte, ou configuration déformée, représentée sur la figure 4. Tel que représenté sur les figures 3 et 4, le couvercle 3 comporte deux évents 5g coopérant avec le clapet aéraulique 5. Les évents 5g traversent la paroi du couvercle 3. A titre de variante, le couvercle 3 peut comporter au moins un évent 5g coopérant avec le clapet aéraulique 5. En configuration fermée, la partie d'obturation 5f obture les évents 5g, l'enceinte 4 est alors confinée. Lorsque le clapet aéraulique 5 est en configuration fermée, la condensation de la vapeur d'eau présente dans l'enceinte 4 permet d'obtenir une dépression dans l'enceinte 4. Lors du préchauffage du bain d'huile, l'eau résiduelle présente dans l'enceinte 4 peut être vaporisée. L'élévation de la pression dans l'enceinte 4 conduit à une déformation de la partie d'obturation 5f qui libère les évents 5g pour laisser échapper la surpression, tel que représenté sur la figure 4. Si l'échappement à l'extérieur de l'enceinte contribue à une diminution suffisante de la pression dans l'enceinte 4, la partie d'obturation 5f peut reprendre sa configuration fermée. Si l'utilisateur retire le couvercle 3 de la cuve 2, la partie d'obturation 5f reprend sa configuration fermée.

A titre de variante, le couvercle 3 n'est pas nécessairement monté pivotant sur le boîtier 8.

A titre de variante, le dispositif de retenue 9 ne comprend pas nécessairement un élément d'accrochage 9b solidaire du couvercle 3 et un élément de retenue 9c solidaire du boîtier 8. Le dispositif de retenue 9 peut notamment comprendre un élément d'accrochage solidaire du boîtier 8 ou de la cuve 2 et un élément de retenue 9c solidaire du couvercle, ou un élément d'accrochage 9b solidaire du couvercle 3 et un élément de retenue 9c solidaire de la cuve 2.

A titre de variante, la friteuse 1 ne comporte pas nécessairement un dispositif de retenue 9 pour maintenir le couvercle 3 plaqué sur la cuve 2. Le couvercle 3 peut notamment être simplement posé sur la cuve 2.

A titre de variante, la friteuse 1 ne comporte pas nécessairement un boîtier 8 recevant la cuve 2.

A titre de variante, la friteuse 1 ne comporte pas nécessairement un dispositif électrique de chauffe 7 pour chauffer la cuve 2. La friteuse 1 pourrait notamment comporter un dispositif électrique de chauffe 7 pour chauffer le bain d'huile contenu dans la cuve 2, ou être dépourvue de dispositif électrique de chauffe 7.

La présente invention n'est nullement limitée à l'exemple de réalisation décrit et à ses variantes, mais englobe de nombreuses modifications dans le cadre des revendications.

## Revendications

1. Friteuse (1) comportant une cuve (2) pour contenir un bain d'huile et un couvercle (3) pour couvrir la cuve (2), la cuve (2) et le couvercle (3) formant alors une enceinte (4), l'enceinte (4) présentant au moins une étanchéité relative par rapport à l'admission d'air extérieur dans l'enceinte (4), le couvercle (3) portant un clapet aéraulique (5) pour mettre en communication l'enceinte (4) avec l'extérieur lorsque la pression régnant dans l'enceinte (4) dépasse une pression seuil, le couvercle (3) comportant un joint annulaire (6) venant en appui annulaire avec la cuve (2) lorsque le couvercle (3) ferme la cuve (2), la cuve (2) présentant un bord supérieur (2a) et un rebord périphérique (2b) entourant le bord supérieur (2a), **caractérisée en ce que** le joint annulaire (6) vient en appui sur le rebord périphérique (2b) autour du bord supérieur (2a) lorsque le couvercle (3) ferme la cuve (2), de sorte qu'en cas de dépression à l'intérieur de l'enceinte (4), la pression extérieure permet de plaquer le joint annulaire (6) contre le rebord périphérique (2b).

2. Friteuse (1) selon la revendication 1, **caractérisée en ce que** le clapet aéraulique (5) présente une configuration fermée, dans laquelle le clapet aéraulique (5) empêche l'air extérieur d'entrer dans l'enceinte (4) par le clapet aéraulique (5), et une configuration ouverte, dans laquelle le clapet aéraulique (5) libère au moins un passage mettant en communication l'enceinte (4) avec l'extérieur.

3. Friteuse (1) selon la revendication 2, **caractérisée en ce que** le clapet aéraulique (5) présentant la configuration ouverte ménage une section de passage supérieure à 10 mm².

4. Friteuse (1) selon l'une des revendications 1 à 3, **caractérisée en ce que** la pression seuil est inférieure à 500 mbar, et de préférence inférieure à 100 mbar.

5. Friteuse (1) selon l'une des revendications 1 à 4, **caractérisée en ce que** la pression seuil est comprise entre 10 et 100 mbar, et de préférence comprise entre 15 et 25 mbar.

6. Friteuse (1) selon l'une des revendications 1 à 5, **caractérisée en ce que** le couvercle (3) présente une surface d'obturation (3a) pour couvrir la cuve (2) et **en ce que** la surface d'obturation (3a) est traversée par le clapet aéraulique (5).

7. Friteuse (1) selon la revendication 6, **caractérisée en ce que** la surface d'obturation (3a) est réalisée en matériau(x) opaque(s).

8. Friteuse (1) selon l'une des revendications 1 à 7, **caractérisée en ce que** l'enceinte (4) présente une étanchéité à l'admission d'air extérieur entre la cuve (2) et le couvercle (3).

9. Friteuse (1) selon l'une des revendications 1 à 8, **caractérisée en ce que** l'enceinte (4) est réalisée en matériau(x) opaque(s).

10. Friteuse (1) selon l'une des revendications 1 à 9, **caractérisée en ce qu'**elle comporte un dispositif électrique de chauffe (7) pour chauffer la cuve (2) et/ou le bain d'huile contenu dans la cuve (2).

11. Friteuse (1) selon l'une des revendications 1 à 10, **caractérisée en ce qu'**elle comporte un dispositif de retenue (9) pour maintenir le couvercle (3) plaqué sur la cuve (2).

12. Friteuse (1) selon l'une des revendications 1 à 11, **caractérisée en ce que** la cuve (2) est montée dans un boîtier (8).

13. Friteuse (1) selon les revendications 11 et 12, **caractérisée en ce que** le dispositif de retenue (9) relie le couvercle (3) au boîtier (8).

14. Friteuse (1) selon l'une des revendications 12 ou 13, **caractérisée en ce que** le couvercle (3) est monté pivotant sur le boîtier (8).

15. Procédé d'amélioration de la conservation d'un bain d'huile dans une friteuse (1) selon l'une des revendications 1 à 14, comprenant les étapes suivantes :
- Après un chauffage d'un bain d'huile contenu dans la cuve (2), fermeture de la cuve (2) contenant le bain d'huile par le couvercle (3) pour former l'enceinte (4), de préférence après retrait des aliments du bain d'huile,
- Refroidissement du bain d'huile contenu dans la cuve (2) avec le couvercle (3) fermant la cuve (2).

16. Procédé d'amélioration de la conservation d'un bain d'huile dans une friteuse (1) selon la revendication 15, consistant à réaliser une étape de préchauffe du bain d'huile contenu dans la cuve (2) avant une cuisson d'aliments, dans laquelle la préchauffe du bain d'huile contenu dans la cuve (2) est effectuée avec le couvercle (3) fermant la cuve (2).

## Patentansprüche

1. Fritteuse (1), die einen Behälter (2) zum Enthalten eines Ölbads und einen Deckel (3) zum Verdecken des Behälters (2) umfasst, wobei der Behälter (2) und der Deckel (3) somit einen geschlossenen Bereich (4) bilden, wobei der geschlossene Bereich (4) mindestens eine Dichte in Bezug auf den Einlass von Außenluft in den geschlossenen Bereich (4) aufweist, wobei der Deckel (3) eine Luftregelungsklappe (5) trägt, um den geschlossenen Bereich (4) mit der Außenseite zu verbinden, wenn der im geschlossenen Bereich (4) herrschende Druck eine Druckschwelle überschreitet, wobei der Deckel (3) eine ringförmige Dichtung (6) umfasst, die ringförmig auf dem Behälter (2) aufliegt, wenn der Deckel (3) den Behälter (2) verschließt, wobei der Behälter (2) eine obere Kante (2a) und einen Umfangsrand (2b), der die obere Kante (2a) umgibt, aufweist, **dadurch gekennzeichnet, dass** die ringförmige Dichtung (6) auf dem Umfangsrand (2b) um die obere Kante (2a) herum aufliegt, wenn der Deckel (3) den Behälter (2) verschließt, sodass im Fall eines Unterdrucks im Inneren des geschlossenen Bereichs (4) der Außendruck erlaubt, die ringförmige Dichtung (6) gegen den Umfangsrand (2b) zu drücken.

2. Fritteuse (1) nach Anspruch 1, **dadurch gekennzeichnet, dass** die Luftregelungsklappe (5) eine geschlossene Konfiguration aufweist, bei der die Luftregelungsklappe (5) verhindert, dass die Außenluft über die Luftregelungsklappe (5) in den geschlossenen Bereich (4) eintritt, und eine offene Konfiguration, bei der die Luftregelungsklappe (5) mindestens einen Durchgang freigibt, der den geschlossenen Bereich (4) mit der Außenseite verbindet.

3. Fritteuse (1) nach Anspruch 2, **dadurch gekennzeichnet, dass** die Luftregelungsklappe (5), die die offene Konfiguration aufweist, einen Durchgangsabschnitt von mehr als 10 mm² einrichtet.

4. Fritteuse (1) nach einem der Ansprüche 1 bis 3, **dadurch gekennzeichnet, dass** die Druckschwelle kleiner als 500 mbar und vorzugsweise kleiner als 100 mbar ist.

5. Fritteuse (1) nach einem der Ansprüche 1 bis 4, **dadurch gekennzeichnet, dass** die Druckschwelle zwischen 10 und 100 mbar und vorzugsweise zwischen 15 und 25 mbar beträgt.

6. Fritteuse (1) nach einem der Ansprüche 1 bis 5, **dadurch gekennzeichnet, dass** der Deckel (3) eine Verschlussfläche (3a) zum Verdecken des Behälters (2) aufweist und dadurch, dass die Verschlussfläche (3a) von der Luftregelungsklappe (5) durchquert wird.

7. Fritteuse (1) nach Anspruch 6, **dadurch gekennzeichnet, dass** die Verschlussfläche (3a) aus einem undurchsichtigem Material (undurchsichtigen Materialien) hergestellt ist.

8. Fritteuse (1) nach einem der Ansprüche 1 bis 7, **dadurch gekennzeichnet, dass** der geschlossene Bereich (4) eine Dichte gegenüber dem Einlass von Außenluft zwischen dem Behälter (2) und dem Deckel (3) aufweist.

9. Fritteuse (1) nach einem der Ansprüche 1 bis 8, **dadurch gekennzeichnet, dass** der geschlossene Bereich (4) aus einem undurchsichtigem Material (undurchsichtigen Materialien) hergestellt ist.

10. Fritteuse (1) nach einem der Ansprüche 1 bis 9, **dadurch gekennzeichnet, dass** sie eine elektrische Heizvorrichtung (7) zum Heizen des Behälters (2) und/oder des im Behälter (2) enthaltenen Ölbads umfasst.

11. Fritteuse (1) nach einem der Ansprüche 1 bis 10, **dadurch gekennzeichnet, dass** sie eine Rückhaltevorrichtung (9) zum Halten des Deckels (3) gedrückt auf dem Behälter (2) umfasst.

12. Fritteuse (1) nach einem der Ansprüche 1 bis 11, **dadurch gekennzeichnet, dass** der Behälter (2) in einem Gehäuse (8) angebracht ist.

13. Fritteuse (1) nach einem der Ansprüche 11 und 12, **dadurch gekennzeichnet, dass** die Rückhaltevorrichtung (9) den Deckel (3) mit dem Gehäuse (8) verbindet.

14. Fritteuse (1) nach einem der Ansprüche 12 oder 13, **dadurch gekennzeichnet, dass** der Deckel (3) schwenkbar auf dem Gehäuse (8) angebracht ist.

15. Verfahren zur Verbesserung der Konservierung eines Ölbads in einer Fritteuse (1) nach einem der Ansprüche 1 bis 14, umfassend die folgenden Schritte:
- Nach einem Heizen eines im Behälter (2) enthaltenen Ölbads, Verschließen des Behälters (2), der das Ölbad enthält, durch den Deckel (3), um den geschlossenen Raum (4) zu bilden, vorzugsweise nach Entnahme der Lebensmittel aus dem Ölbad,
- Kühlen des im Behälter (2) enthaltenen Ölbads, wobei der Deckel (3) den Behälter (2) verschließt.

16. Verfahren zur Verbesserung der Konservierung eines Ölbads in einer Fritteuse (1) nach Anspruch 15, das darin besteht, einen Schritt des Vorheizens des im Behälter (2) enthaltenen Ölbads vor einem Kochen von Lebensmitteln durchzuführen, wobei das Vorheizen des es im Behälter (2) enthaltenen Ölbads ausgeführt wird, wobei der Deckel (3) den Behälter (2) verschließt.

## Claims

1. Fryer (1) comprising a container (2) for holding an oil bath and a lid (3) for covering the container (2), the container (2) and the lid (3) thus forming an enclosure (4), the enclosure (4) having at least one relative seal with respect to the intake of outside air into the enclosure (4), the lid (3) having a vent valve (5) for ensuring the enclosure (4) communicates with the outside when the pressure in the enclosure (4) exceeds a threshold pressure, the lid (3) comprising an annular seal (6) annularly bearing with the container (2) when the lid (3) closes the container (2), the container (2) having an upper edge (2a) and a peripheral edge (2b) surrounding the upper edge (2a), **characterised in that** the annular seal (6) bears on the peripheral edge (2b) around the upper edge (2a) when the lid (3) closes the container (2), such that in case of depression inside the enclosure (4), the outside pressure makes it possible to flatten the annular seal (6) against the peripheral edge (2b).

2. Fryer (1) according to claim 1, **characterised in that** the vent valve (5) has a closed configuration, wherein the vent valve (5) prevents the outside air from entering into the enclosure (4) by the vent valve (5), and an open configuration, wherein the vent valve (5) releases at least one passage ensuring the enclosure (4) is in communication with the outside.

3. Fryer (1) according to claim 2, **characterised in that** the vent valve (5) having the open configuration conserves a 10mm² upper passage section.

4. Fryer (1) according to one of claims 1 to 3, **characterised in that** the threshold pressure is less than SOOmbar, preferably less than 100mbar.

5. Fryer (1) according to one of claims 1 to 4, **characterised in that** the threshold pressure is between 10 and 100mbar, and preferably between 15 and 25mbar.

6. Fryer (1) according to one of claims 1 to 5, **characterised in that** the lid (3) has a blocking surface (3a) for covering the container (2) and **in that** the blocking surface (3a) is passed through by the vent valve (5).

7. Fryer (1) according to claim 6, **characterised in that** the blocking surface (3a) is made of opaque material(s).

8. Fryer (1) according to one of claims 1 to 7, **characterised in that** the enclosure (4) has a seal to the intake of outside air between the container (2) and the lid (3).

9. Fryer (1) according to one of claims 1 to 8, **characterised in that** the enclosure (4) is made of opaque material(s).

10. Fryer (1) according to one of claims 1 to 9, **characterised in that** it comprises an electrical heating device (7) for heating the container (2) and/or the oil bath held in the container (2).

11. Fryer (1) according to one of claims 1 to 10, **characterised in that** it comprises a retaining device (9) for keeping the lid (3) flattened on the container (2).

12. Fryer (1) according to one of claims 1 to 11, **characterised in that** the container (2) is mounted in a casing (8).

13. Fryer (1) according to claims 11 and 12, **characterised in that** the retaining device (9) connects the lid (3) to the casing (8).

14. Fryer (1) according to one of claims 12 or 13, **characterised in that** the lid (3) is mounted pivoting on the casing (8).

15. Method for improving the conservation of an oil bath in a fryer (1) according to one of claims 1 to 14, comprising the following steps:
- After a heating of an oil bath held in the container (2), closing of the container (2) holding the oil bath by the lid (3) for forming the enclosure (4), preferably after removal of the food from the oil bath,
- Cooling of the oil bath held in the container (2) with the lid (3) closing the container (2).

16. Method for improving the conservation of an oil bath in a fryer (1) according to claim 15, consisting of carrying out a step of preheating the oil bath held in the container (2) before cooking food, wherein the preheating of the oil bath held in the container (2) is carried out with the lid (3) closing the container (2).
